# EUROPÄISCHE PATENTSCHRIFT

(11) **EP 0 421 091 B1**
(45) Veröffentlichungstag und Bekanntmachung des Hinweises auf die Patenterteilung: **10.11.1993**
(21) Anmeldenummer: 90115438.5
(22) Anmeldetag: 11.08.1990
(51) Int. Cl.: B23K 26/00

(54) **Überlapp- oder Steg-Schweissnaht für verzinkte Bleche**
Lap-weld- or web joint-weld for galvanized sheet-irons
Soudure par recouvrement ou soudure de joints d'âme pour tôles galvanisées

(30) Priorität: 06.10.1989 DE 3933408
(43) Veröffentlichungstag der Anmeldung: 10.04.1991
(73) Patentinhaber: MERCEDES-BENZ AG, 70327 Stuttgart (DE)
(72) Erfinder: Spies, Bernhard, Dr.-Ing., D-7032 Sindelfingen (DE); Thoms, Volker, Dr.-Ing., D-7260 Calw-Hirsau (DE)

(56) Entgegenhaltungen:
- PATENT ABSTRACTS OF JAPAN vol. 5, no. 123 (M-082) 08 August 1981,& JP-A-56 062688 (TOSHIBA CORP.) 28 Mai 1981,
- PATENT ABSTRACTS OF JAPAN vol. 8, no. 262 (M-341) 30 November 1984,& JP-A-59 133985 (TOSHIBA KK) 01 August 1984,

## Beschreibung

Die Erfindung betrifft eine Überlapp- oder Stegschweißnaht für verzinkte Bleche nach dem Oberbegriff des Anspruchs 1, wie sie beispielsweise aus der EP-A-178 394 als bekannt hervorgeht.

Aus der EP-A-178 394 ist eine Laser-Schweißnaht für verzinkte Bleche bekannt, bei der im Bereich der Laser-Schweißnaht aus einem der Bleche in Gegenrichtung des angelegten und verschweißten Bleches wenigstens eine Längssicke ausgedrückt ist, die parallel zur Schweißnaht ausgerichtet ist und die zusammen mit dem überlappenden Blech einen parallel zur Schweißnaht verlaufenden Entgasungskanal bildet. Damit ein Abtransport der beim Verschweißen entstehenden und die Laser-Schweißnaht verschlechternden Zinkdämpfe ermöglicht ist, muß dieser durch die Längssicke und das angelegte Blech gebildete Entgasungskanal über die gesamte Länge der Schweißnaht durchgehend ausgebildet sein und wenigstens eine Öffnung an die äußere Atmosphäre aufweisen. Dieser durch die Längssicke gebildete Entgasungskanal hat aber, da die Entgasungswege sehr lang sind und da mit ansteigender Schweißdauer das Volumen an abzuleitendem Zinkdampf immer größer wird, u.U. erhebliche Strömungswiderstände, die Drainagewirkung beeinträchtigen. Durch die sich daraus ergebenden Gas- und Fremdstoffeinflüsse ist, wie erwähnt, die Qualität der Schweißnaht erheblich gemindert.

Die Aufgabe der Erfindung ist es, die gattungsgemäß zugrundegelegte Überlapp- oder Steg-Schweißnaht dahingehend weiterzuentwickeln, daß eine gute Qualität der Schweißnaht gesichert ist.

Die Aufgabe wird erfindungsgemäß mit den kennzeichnenden Merkmalen des Anspruchs 1 gelöst. Die in das Blech in Richtung des jeweils angelegten Bleches eingedrückten noppenartigen Erhebungen, im folgenden Noppen genannt, sichern bei einem Spannen der Bleche gegeneinander im Überlappungsbereich den Abstand der Blechlagen und somit die in zwei Richtungen quer zur Laser-Schweißnaht verlaufenden kurzen Entgasungswege/Lüftkanäle. Weitere vorteilhafte Ausgestalltungen sind den Unteransprüchen entnehmbar.

Zwei Ausführungsbeispiele sind in den Zeichnungen dargestellt und werden im folgenden erläutert. Dabei zeigt:
- Figur 1: eine Laser-Schweißnaht zwischen den Noppen entlang der gleichen Fluchtlinie und
- Figur 2: die Laser-Schweißnaht zwischen zwei Noppenreihen.

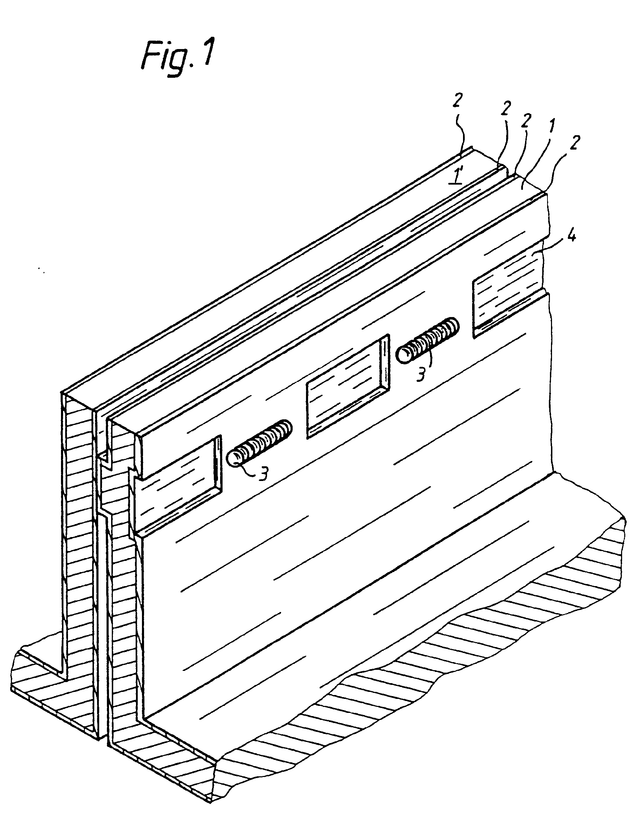

In Figur 1 sind zwei verzinkte Bleche 1, 1' dargestellt, die an einem ihrer Ränder rechtwinklig gebogen und an diesen Bereich, der den überlappten Bereich bildet, einander angenähert und anschließend miteinander verschweißt werden. Das eine Blech 1 weist entlang einer Fluchtlinie angeordnete Nocken 4 auf, die aus dem einen Blech 1 definiert in Richtung des anderen Bleches 1' eingedrückt sind. Auf diese Art sind sie zwischen den Blechen 1, 1' im Überlappungsbereich 5 distanzsichernd angeordnet. In den Bereichen zwischen den Noppen 4 entlang der Fluchtlinie sind Laser-Schweißnähte 3 angebracht, die sich gleichfalls entlang dieser Fluchtlinie erstrecken. Die Laser-Schweißnähte 3 weisen von den Nocken 4 einen Abstand auf, womit immer in zwei Raumrichtungen verlaufende kurze Luftkanäle für das beim Verschweißen verdampfende Zink der Beschichtung 2 der Bleche 1, 1' zur Verfügung steht.

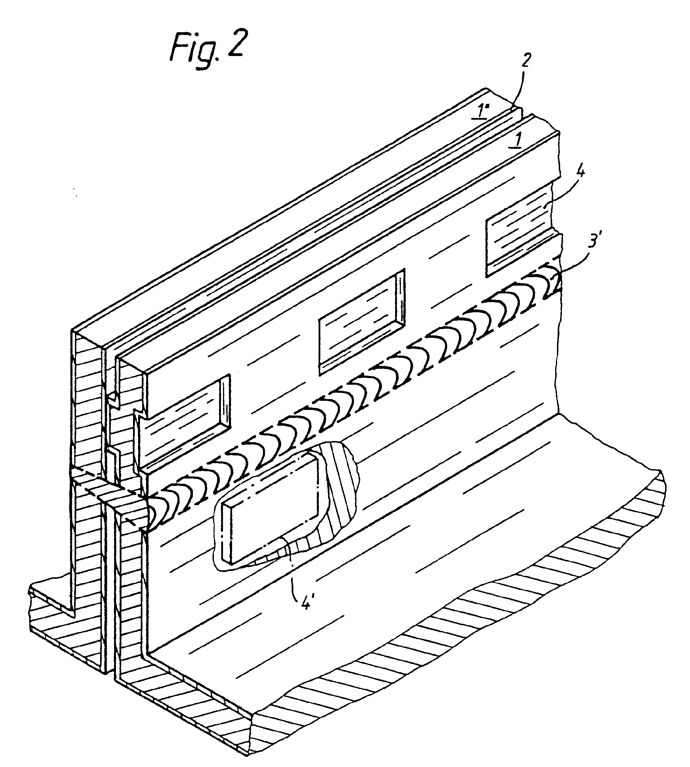

In Figur 2 ist ein weiteres Ausführungsbeispiel abgebildet. In diesem Fall weist jedes der beiden Bleche 1, 1'' entlang einer jeweils einem Blech zugeordneten Fluchtlinie angeordnete Noppen 4, 4' auf. Die Noppen 4, 4' sind beidseitig einer zwischen den beiden Fluchtlinien der Noppen 4, 4' angebrachten, durchgehenden Laser-Schweißnaht 3' mit Abstand zu dieser angeordnet. Die ersten Noppen 4 des einen Bleches 1 sind hierbei alle auf einer Seite der Schweißnaht 3' und die anderen Noppen 4' des anderen Bleches 1'' auf der anderen Seite angebracht. Ferner sind die ersten Noppen 4 im Bereich der Lücken der entlang der zweiten Fluchtlinie, die auf der anderen Längsseite der Laserschweißnaht 3' verläuft, angeordneten zweiten Noppen 4' angebracht. Damit wird das Spannen der beiden Bleche 1, 1'' aneinander erleichtert, da die Bleche 1, 1'' im überlappten Bereich 5 nicht gegeneinander verkippen können. Um denselben Effekt zu erreichen ist es natürlich auch möglich, die Noppen sowohl auf Lücken als auch beidseitig der Laserschweißnaht in einem einzigen Blech anzuordnen.

## Patentansprüche

1. Überlapp- oder Stegschweißnaht für verzinkte Bleche (1,1'), mit einer quer zu den überlappten Blechen (1,1') ausgerichteten und die Blechlagen durchdringenden Laser-Schweißung, ferner mit dem Verlauf der Schweißnaht (3,3') folgenden, einen Fluchtweg für bei der Schweißung entstehenden Gase bildenden und in wenigstens eines der Bleche (1,1') eingedrückte Erhebungen, wobei die Erhebungen neben der Laser-Schweißnaht (3,3') angeordnet sind,
**dadurch gekennzeichnet**,
daß die Erhebungen durch eine Vielzahl von mit Abstand zueinander in mindestens einer Noppenreihe angeordneten Noppen (4,4') gebildet sind, die einen Abstand zwischen den Blechen (1,1') haltend in Richtung auf das gegenüberliegende Blech (1,1') hin ausgedrückt sind.

2. Überlapp- oder Steg-Schweißnaht für verzinkte Bleche nach Anspruch 1,
**dadurch gekennzeichnet,**
daß die Noppen (4, 4') bzw. Sicken beidseitig der Laser-Schweißnaht (3, 3') angeordnet sind.

3. Überlapp- oder Steg-Schweißnaht für verzinkte Bleche nach Anspruch 1 oder 2,
**dadurch gekennzeichnet,**
daß die Noppen (4, 4') bzw. Sicken auf der einen Längsseite der Laser-Schweißnaht (3, 3') gegenüberliegend den Lücken zwischen zwei benachbarten Noppen (4, 4') der anderen Längsseite angeordnet sind.

4. Überlapp- oder Steg-Schweißnaht für verzinkte Bleche nach Anspruch 1 oder 2,
**dadurch gekennzeichnet,**
daß die in der gleichen Fluchtlinie wie die Noppen (4) verlaufende Laser-Schweißnaht (3) unterbrochen und nur im Bereich zwischen den Noppen (4) verläuft.

## Claims

1. Welded lap or web joint for galvanized sheets (1, 1'), having a laser weld orientated transversely to the overlapped sheets (1, 1') and penetrating through the sheet layers, also having elevations which follow the shape of the weld (3, 3'), form an escape path for gases produced during welding and are pressed into at least one of the sheets (1, 1'), the elevations being arranged next to the laser weld (3, 3'), characterized in that the elevations are formed by a multiplicity of protrusions (4, 4') which are arranged at a distance from one another in at least one row of protrusions and which are pressed out onto the opposite sheet (1, 1'), maintaining a distance between the sheets (1, 1').

2. Welded lap or web joint for galvanized sheets according to Claim 1, characterized in that the protrusions (4, 4') or beads are arranged on either side of the laser weld (3, 3').

3. Welded lap or web joint for galvanized sheets according to Claim 1 or 2, characterized in that the protrusions (4, 4') or beads are arranged on one longitudinal side of the laser weld (3, 3') opposite the gaps between two adjacent protrusions (4, 4') of the other longitudinal side.

4. Welded lap or web joint for galvanized sheets according to Claim 1 or 2, characterized in that the laser weld (3) running in the same straight line as the protrusions (4) is interrupted and runs only in the region between the protrusions (4).

## Revendications

1. Soudure par recouvrement ou soudure de joints d'âme pour tôles galvanisées (1,1'), avec une soudure laser, orientée transversalement par rapport aux tôles (1,1') en recouvrement et traversant les couches de tôles, avec en outre des bossages, qui suivent l'allure du cordon de soudure (3,3'), en formant un passage de fuite pour les gaz produits lors de la soudure et sont formés par enfoncement dans au moins l'une des tôles (1,1'), les bossages étant disposés à côté du cordon de soudure au laser (3,3'), caractérisée en ce que les bossages sont formés par une pluralité de boutons (4,4'), disposés de façon mutuellement espacée, en au moins une rangée de boutons et formés avec leur relief tourné en direction de la tôle (1,1') placée en face, en maintenant un espacement entre les tôles (1,1').

2. Soudure par recouvrement ou soudure de joints d'âme pour tôles galvanisées selon la revendication 1, caractérisée en ce que les boutons (4,4'), respectivement les joncs sont disposés des deux côtés du cordon de soudure au laser (3,3').

3. Soudure par recouvrement ou soudure de joints d'âme pour tôles galvanisées selon la revendication 1 ou 2, caractérisée en ce que les boutons (4,4'), respectivement les joncs sont disposés sur une face longitudinale du cordon de soudure au laser (3,3'), à l'opposé des vides existant entre deux boutons (4,4') voisins de l'autre face longitudinale.

4. Soudure par recouvrement ou soudure de joints d'âme pour tôles galvanisées selon la revendication 1 ou 2, caractérisée en ce que le cordon de soudure au laser (3) s'étendant dans le même alignement que les boutons (4) est interrompu et ne s'étend que dans la zone située entre les boutons (4).
